# EUROPEAN PATENT APPLICATION

(11) **EP 2 993 608 A1**
(43) Date of publication of application: **09.03.2016**
(21) Application number: 14306354.3
(22) Date of filing: 03.09.2014
(51) Int. Cl.: G06F 21/77, H04L 29/06, H04W 4/00, G06Q 20/34

(54) **A method for changing the ownership of a secure element**

(71) Applicant: GEMALTO SA, 92190 Meudon (FR)
(72) Inventor: Torr, Chris, 92190 MEUDON (FR)
(74) Representative: Cassagne, Philippe M.J.

(57) **Abstract**

This invention relates to a method for changing the ownership of a secure element configured to memorize an identifier of a current owner, said device further comprising a mechanism for loading at least an application by using an application load unit transmitted to the secure element through a telecommunication network, said method comprising the following steps: receiving (100) a dummy application load unit comprising an identifier of a new owner of the secure element; verifying (101) that the dummy application load unit has been emitted by the current owner of the secure element; if (102) the current owner has been correctly identified as the emitter of the dummy application load unit, changing (103) the ownership of the secure element by replacing the identifier of the current owner memorized in the secure element by the identifier of the new owner.

## Description

### TECHNICAL FIELD

The present invention relates to a method for changing the ownership of a secure element, is applicable to devices connected to a network such as the internet. It is also applicable to smart-grid and machine-to-machine communications.

### BACKGROUND OF THE INVENTION

In this specification, a secure element refers to a hardware and/or software module whose aim is to secure the access to a system delivering services. Further, a secure element is tamper-resistant and is configured to embed one or several applications as well as confidential and cryptographic data. According to this definition, a secure element may be a smart card, a chipset embedded in an electronic platform, a module of a System on Chip (SoC) or a software module memorized for being used by a processor. In the example of a smart card, a secure element can be inserted in a slot integrated in a device which is deployed by an operator. For example, smart cards can be inserted into a plurality of energy meters deployed by a distribution network operator.

A secure element is generally associated with its owner. In this specification, the word owner designates the entity that has the right to add and remove embedded software applications in the secure element. As such, the owner can be the issuer of a secure element, for example a bank providing credit cards to its clients. In a different context, the owner can be the proprietor of a device which is associated with a given secured element. For example, a distribution network operator can provide an energy meter associated with a secure element for each of his customers while keeping the ownership of both device and secure element. Further, the owner may also designate a company which is responsible for the maintenance of a plurality of connected objects such as coffee machines, each of them being associated with a secured element.

The ownership information is usually memorized inside the secure element. In these various contexts, the owner of the security element and possibly of an associated device may change during their lifetime. An existing solution, when applicable, is to replace the secure element. This would imply the new owner to provide a new secure element as well as instructions on how to replace the old one by the new one and possibly on how to activate the new one. Alternatively, the new owner may send on the spot a technical officer to install the new secure element.

These solutions are inefficient as significant additional costs are implied by the change of ownership. Therefore, an inexpensive solution allowing changing the ownership of a secure element and/or to an associated device would be highly appreciated by the market players.

### SUMMARY OF THE INVENTION

A method is proposed for changing the ownership of a secure element configured to memorize an identifier of a current owner, said device further comprising a mechanism for loading at least an application by using an application load unit transmitted to the secure element through a telecommunication network. The method comprises the following steps:
- receiving a dummy application load unit comprising an identifier of a new owner of the secure element;
- verifying that the dummy application load unit has been emitted by the current owner of the secure element;
- if the current owner has been correctly identified as the emitter of the dummy application load unit, changing the ownership of the secure element by replacing the identifier of the current owner memorized in the secure element by the identifier of the new owner.

According to one aspect of the invention, the dummy application load unit contains a first serial number, said first serial number being compared once received by the secure element with the second serial number which is the serial number of said secure element in order to verify that the change of ownership is allowed.

According to one aspect of the invention, a first set of at least one symmetric key known by the secure element and an emitter of the dummy application load unit is used to authenticate the received dummy application load unit as being emitted by the current owner of the target device.

In one embodiment, the method comprises a step wherein an encrypted channel is set up between the emitter of the dummy application load unit and the target device by using a second set of at least one symmetric key known by the target device and the emitter, said channel being used to receive the dummy application load unit.

According to one aspect of the invention, the dummy application load unit contains a third set of at least one symmetric key to be used by the new owner to access and configure the target device after the change of ownership.

According to one aspect of the invention, the identifier of the current owner is embodied in an application resident on the target device called the Owner Security Domain (OSD).

According to one aspect of the invention, the dummy application load unit contains an identifier of the owner security domain, a step being implemented to verify before changing the ownership that this identifier corresponds to the owner security domain of the target device.

According to one aspect of the invention, the method comprises a step deleting at least one of the applications installed on the secure element once the identity of the current owner has been replaced by the identity of the current owner.

According to one aspect of the invention, the identity of the emitter of the dummy application load unit is verified before changing the ownership of the target device by implementing the following steps:
- receiving in association with the dummy application load unit an identifier (mcd_issuer_id) of the current owner of the device;
- checking that the received identifier corresponds to the identifier which is memorized in the secure element.

According to one aspect of the invention, the followings steps are applied before changing the ownership of the target device:
- receiving an identifier (application_id) of a target area in the target device where the identifier of the current owner of the target device is memorized;
- verifying that this identifier correctly identifies the area in the target security device where the identifier of the current owner of the device is memorized.

According to one aspect of the invention, the method is adapted to be compliant with MULTOS standard. More particularly, the dummy application load unit corresponds to an application load unit (ALU) according to MULTOS standard.

According to one aspect of the invention, the dummy application load unit is an application load unit (ALU) of confidential type.

According to one aspect of the invention, a MULTOS application load certification (ALC) is used to verify that the dummy application load unit has been emitted by the current owner of the target device.

The invention also concerns a secure element configured to be connected to a telecommunication network and to memorize an identifier of a current owner, said secure element further comprising a mechanism for loading at least an application by using an application load unit transmitted to the target device through the network, said device being adapted to:
- receive a dummy application load unit comprising an identifier of a new owner of the target secure element;
- verify that the dummy application load unit has been emitted by the current owner of the element;
- if the current owner has been correctly identified as the emitter of the dummy application load unit, change the ownership of the secure element by replacing the identifier of the current owner memorized in the secure element by the identifier of the new owner.

According to one aspect of the invention, the secure element is a multi-application integrated-circuit card system.

The invention also concerns a computer program comprising software code adapted to perform the method as described above.

### BRIEF DESCRIPTION OF THE DRAWINGS

Additional features and advantages of the invention will be more clearly understandable after reading a detailed description of embodiments of the invention, given as an indicative and non-limitative examples, in conjunction with the following drawings:
- figure 1 is a flowchart describing schematically the method according to the invention;
- figure 2 illustrates the principle of loading an application into a MULTOS smartcard;
- figure 3 gives an example of a dummy application load unit of confidential type;
- figure 4 is a flow diagram of a method for changing the ownership of a MULTOS secure element.

### DETAILED DESCRIPTION

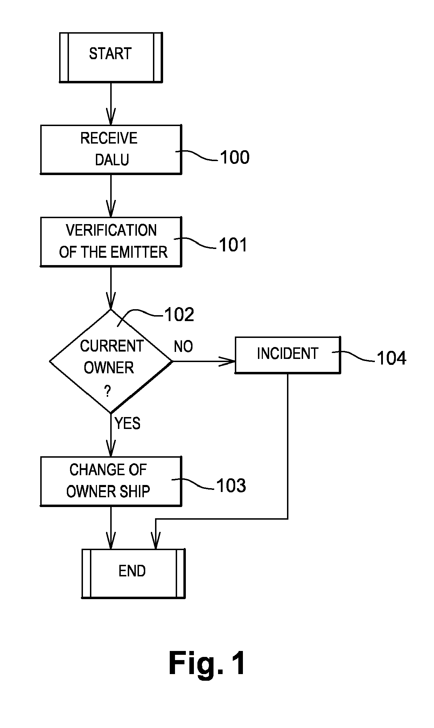

Figure 1 is a flowchart describing schematically the method according to the invention.

The method according to the invention aims at changing the ownership of a secure element by improving an already existing mechanism formerly dedicated to the loading of applications in a secure element and which is available if many secured system, like for example a MULTOS (trademark) or a GlobalPlatform (trademark) system. For that purpose, the method according to the invention modifies the use of the data units which are normally dedicated to the transfer of the code of applications toward one or several targeted secure elements. In this description, these data units are called application load units (ALU). Further, an application load unit which has been modified for changing the ownership of a secure element is called dummy application load unit (DALU).

This method is applicable to secure elements which can be connected directly or indirectly to a telecommunication network. The application is applicable to any kind of telecommunication networks including wired and wireless ones. For example, the secure element can be connected through an UMTS (Universal Mobile Telecommunication System), LTE (Log Term Evolution), Wi-Fi , Internet or a combination of various interconnected networks.

The secure element may be configured to access directly to a telecommunication network. For that purpose, it may incorporate the required hardware and/or software to do so.

Alternatively, the secure element may access indirectly to a telecommunication network. In that case, an associated device into which the secure element is inserted or incorporated comprises the hardware and/or software components allowing such an access.

The ownership is attributed by memorizing ownership information inside the secure element. This ownership information is for example an identifier of the current owner of the secure element. In this description, and depending on the context, changing the ownership of a secure device may also be interpreted as changing the ownership of a device which is associated to the secure element. For example, in case of an energy meter changing the ownership of an inserted secure element also means changing the ownership of the energy meter itself.

The method according to the invention comprises a first step 100 in which a dummy application load unit comprising an identifier of a new owner of the target device is received by a target secure element for which the ownership need to be changed.

Then, it is verified 101 that the dummy application load unit has been emitted by the current owner of the target device. Different techniques may be used for that purpose, with or without the emission of a certificate. According to this invention, the current owner of the secure element is the only one which is capable to change the ownership of the secure element. Advantageously, this secures the mechanism for changing the ownership information as these data are sensitive. For that purpose, this checking 101 is essential as it will forbid to any third party to change the ownership of a secure element and potentially to take control of it as well as of its associated device.

The method also comprises a third step 103 that is applied when 102 the current owner of the secure element has been correctly identified (step 101) as the emitter of the received dummy application load unit. Step 103 changes the ownership of the target device by extracting the identifier of the new owner from the dummy application load unit and by replacing the identifier of the current owner memorized in the secure element by said identifier of the new owner. From that point in time, the ownership of the secure element has changed and the new owner becomes the current owner. He is therefore able to update and/or delete applications.

One of the main advantages of the invention is that the change of ownership can performed remotely onto already deployed secured elements. It is not further required to replace the secure elements to change its ownership. Additionally, the implementation of the method is made simple as an already existing mechanism, present in many types of secure elements, is improved. As an example, secure elements may be easily upgraded for the method to be supported. For that purpose, a new application with specific software code can be transmitted to the secure element using a classical application load unit (i.e. which is not a dummy one).

In one embodiment of the invention, the dummy application load unit contains a serial number which is the serial number of a secure element. When a secure element receives a dummy application load unit, the serial number of the DALU is compared with the serial number of the secure element. The process of verifying that a change of ownership is allowed is made stronger as, in this embodiment, a second checking (not represented on figure 1) is performed in addition to step 101. The dummy application load unit may also comprise a plurality of different serial numbers. It is therefore possible to target a plurality of secure elements for a global change of ownership.

According to one aspect of the invention, a first symmetric key can be used for authenticating that a dummy application load unit received by a secure element has been emitted by the current owner of the target device. In that case, the symmetric key is equivalent to an identifier of the current owner. As this key is applied to the dummy application load unit by the emitter and is known by the secure element, said dummy application load unit can be authenticated. The skilled person will appreciate that the symmetric key should be transmitted securely to the secure element.

In another aspect of the invention, the dummy application load unit includes an identifier of the current owner of the secure element. Once the dummy application load unit is received, the identifier is retrieved by the secure element and compared to the identifier which is memorized inside the secure element. This is another way to verify the identity of the emitter of the dummy application load unit and it can be used as an alternative or in combination with the use of the aforementioned first symmetric key.

Further, an encrypted channel can be set up between the emitter of the dummy application load unit and the secure element by using a second symmetric key for the transmission of the dummy application load unit. This key has to be known by the secure element and the emitter. This will advantageously prevent an unauthorized third party to access to the identity of the new owner of the secure element.

In another aspect of the invention, a third symmetric key can be attributed to the new owner by the current owner. This key will be transmitted by the current owner to the new owner and to the secure element by adding it to the dummy application load unit. Thus, when changing its ownership, the secure element will also get this third key once the dummy application load unit is acquired. The new owner is then capable of setting up a secure channel using this third key. It is now possible for him to upload new applications and/or updates to the secure element as well as deleting old ones securely. The new owner will be then capable of changing this third key to prevent the former owner to access to the secure element.

The identifier of the current owner can be embodied in an application resident on the secure element called the Owner Security Domain (OSD). Thus, replacing the identifier of the current owner by the identifier of a new owner can be handled by updating an application installed on the secure element.

The dummy application load unit may contain an identifier of the owner security domain and an additional verification step can be carried out before changing the ownership of the secure element to check that this identifier corresponds to the owner security domain of the secure element. In one embodiment, the identifier of the owner security domain is chosen as its address in the memory of the secure element.

The method according to the invention may comprise an optional step designed to delete at least one of the applications installed on the secure element once the identity of the current owner has been replaced by the identity of the new owner. In one embodiment, all the applications installed by the former owner may be deleted in order to provide a blank secure element to the new owner. He may then install his own applications remotely.

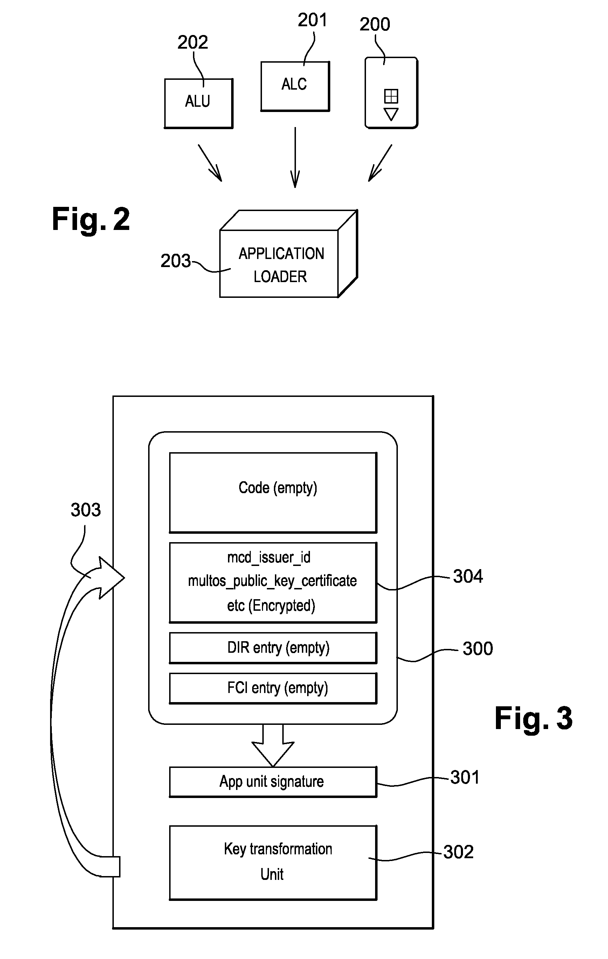

Figure 2 illustrates the principle of loading an application into a MULTOS smartcard. The method according to the invention has been described

As already mentioned, a secure element usually memorizes one of more applications which may be used for different purposes such as identifying a subscriber before allowing him to access to a set of services. An operator, which has deployed a plurality of devices for them to be used by its subscribers, may find useful to update, remove or add new applications remotely. For that purpose, different standards and techniques have been developed recently. MULTOS (MULTi application Operating System) is an example of multi-application operating system allowing loading and deleting applications even when secure elements are already deployed. In that case, the secure element corresponds to a smart card 200. One advantages of this solution is that a smart card 200 which is already manufactured and deployed can be updated remotely whenever required. In this way, replacements of already deployed smart cards are avoided.

The process of loading and deleting applications in MULTOS cards is well known and is described in the Guide to Loading and Deleting (GLDA), MAO-DOC-TEC-008 v2.24. For loading an application, the card issuer provides a certificate 201 called application load certificate (ALC). This certificate can be card specific or provided for a group of cards and allows verifying that the application to be loaded is valid and that the loading is authorized by the card issuer. The application code itself is transmitted to the smart card thanks to an application load unit generated by an application provider (the issuer of the smartcard, for example). The application load unit also comprises data, directory file entry (DIR) and file control information (FCI).

The MULTOS application load procedure consists into gathering information, acquire the ALU and ALC, performing integrity checks and then loading the application. More details about this procedure can be found in the aforementioned document.

In order to implement the application load procedure, a device 203 called application loader may be used. This comprises a communication module designed to collect the ALC 201 and ALU 202 through a telecommunication network. Further, the device 203 comprises a slot to receive a smartcard 200.

Note that the application load procedure as well as the method according to the invention can be implemented directly inside the secure element without using a device 203.

In this embodiment, wherein the invention is applied to MULTOS, the ownership information is embodied in the operating system data, logically associated with the Master File which has an application identifier (AID) equal to 0xA0000001444D554C544F53.

For the purpose of updating the ownership information, an application load unit (ALU) and load certificate (ALC) with the following characteristics are generated on behalf of the current owner.

In one embodiment, the dummy application load unit (DALU) contains no executable code and has no name (DIR) or control information (FCI).

The data section of the dummy ALU contains only the new ownership information. For MULTOS this information may contain elements such as, but not limited to, the mcd_issuer_id and multos_public_key_certificate.

The MULTOS standard defines three types of application load unit, namely unprotected ALU, protected ALU and confidential ALU. These types of application load unit are described in details in the Moasco document entitled "Guide to Generating Application Load Units", MAO-DOC-TEC-009 v2.7. As the change of ownership has to be secure, the dummy application unit should preferably be of protected or confidential type.

A protected ALU has a digital signature (called Application Signature) for detecting any tampering or corruption of the ALU. The application signature can be generated only by the application provider, which is the current owner in the case for DALU.

Figure 3 gives an example of a dummy application load unit of confidential type. A confidential ALU includes, in addition to an Application Signature 301, a Key Transformation Unit (KTU) 302. The KTU allows setting up one or more ciphered sections 300 in the ALU. Advantageously, if a confidential ALU is chosen to implement a DALU, the ownership information 304 cannot be read by a third party.

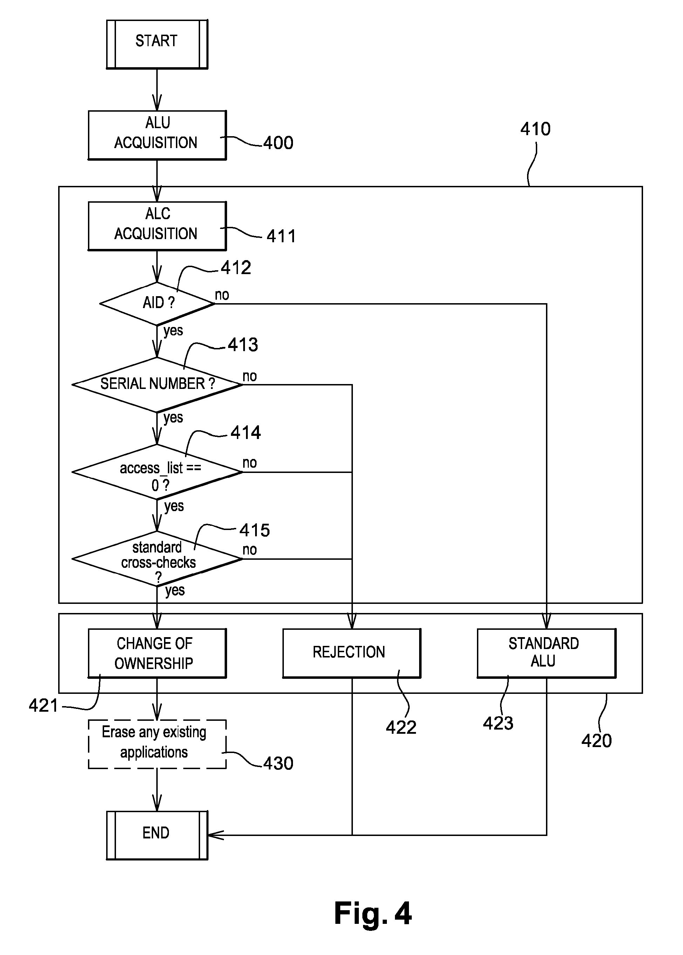

Figure 4 is a flow diagram of a method for changing the ownership of a MULTOS secure element. In this example, the dummy application load unit DALU contains no executable code and has no name DIR or control information FCI.

The flow diagram is broken down into four phases 400, 410, 420 and 430. The first phase 400 corresponds to the acquisition of a MULTOS application load unit which can be either a classical one (ALU) or a dummy one (DALU). Then, a verification phase 410 is implemented in order to identify which type of application unit has been received and in case of a DALU, to identify if it fulfils one or several verification criteria. Then, the application load unit is processed 420. In case of a DALU, this means that the new ownership information is installed. Finally, one or several additional processes 430 may be carried out in order to finalize the change of ownership. The four phases 400, 410, 420, 430 are detailed hereafter.

At the beginning, the application load unit is loaded 400. Then, an ALC certificate is loaded 411.

An ALC certificate may be generated such that it includes the following relevant fields:
- Issuer ID (mcd_issuer_id): it designates the issuer/owner of the secure element;
- MCD Number (mcd_number): if the number is not zero, the certificate can only be used to load the application to the card which is associated to this number;
- Application Identifier (application_id): an identifier specific to a single application and which designates the application to be installed on the secure element;
- Access List (access_list): it comprises two bytes defining the permissions given to the application to be installed on the secure element.

In this example, the mcd_issuer_id is set to the current owner, the access_list field is set to zero, which means that no permissions are granted and the application_id is set to 0xA0000001444D554C544F53 which corresponds to the application identifier of the Master File according to MULTOS standard.

As for the mcd_number, it can be set to the serial number of the secure element to be updated.

Based on the received ALU and ALC, several verifications are carried out. It is verified 412 that the application_id received in the ALC correspond to the application_id of the master file memorized inside the secure element. If no, the received application load unit is processed 423 as a standard application load unit. If yes, a subsequent verification 413 is applied.

The next verification 413 consists into checking that the serial number of the secure element corresponds to the mcd_number field. If no, the received application unit is rejected 422. If yes, a subsequent verification 414 is applied.

Then, another verification 414 consists into checking that the access_list field of the received ALC is equal to zero. If no, the received application unit is rejected 422. If yes, a subsequent verification 415 is applied.

The next verification 415 consists into implementing standards cross-checks which are normally applied to a standard ALU. These standard cross checks are described in the "Guide to Generating Application Load Units", MAO-DOC-TEC-009 v2.7, section 3.4. In particular, it is checked that the mcd_issuer_id transmitted with the ALC is the same as the one which is memorized in the secure element and corresponds to the current owner.

When an application load unit is identified as a DALU and verified, the ownership of the secure element is changed by extracting the identifier of the new owner from the dummy application load unit and by replacing the identifier of the current owner memorized in the Master File by the extracted identifier.

Then, an additional process 430 erasing one or several of the existing applications present in the secure element. This process may be applied once the ownership information has been updated.

## Claims

1. A method for changing the ownership of a secure element configured to memorize an identifier of a current owner, said device further comprising a mechanism for loading at least an application by using an application load unit transmitted to the secure element through a telecommunication network, said method comprising the following steps:
- receiving (100, 400) a dummy application load unit comprising an identifier of a new owner of the secure element;
- verifying (101, 410) that the dummy application load unit has been emitted by the current owner of the secure element;
- if (102, 421) the current owner has been correctly identified as the emitter of the dummy application load unit, changing (103) the ownership of the secure element by replacing the identifier of the current owner memorized in the secure element by the identifier of the new owner.

2. The method according to claim 1, wherein the dummy application load unit contains a first serial number, said first serial number being compared once received by the secure element with the second serial number which is the serial number of said secure element in order to verify that the change of ownership is allowed.

3. The method according to any of the preceding claims, wherein a first set of at least one symmetric key known by the secure element and an emitter of the dummy application load unit is used to authenticate the received dummy application load unit as being emitted by the current owner of the target device.

4. The method according to claim 3 comprising a step wherein an encrypted channel is set up between the emitter of the dummy application load unit and the target device by using a second set of at least one symmetric key known by the target device and the emitter, said channel being used to receive the dummy application load unit.

5. The method according to one of the preceding claims, wherein the dummy application load unit contains a third set of at least one symmetric key to be used by the new owner to access and configure the target device after the change of ownership.

6. The method according to any of the preceding claims, wherein the identifier of the current owner is embodied in an application resident on the target device called the Owner Security Domain.

7. The method according to one of the preceding claims, wherein the dummy application load unit contains an identifier of the owner security domain, a step being implemented to verify before changing the ownership that this identifier corresponds to the owner security domain of the target device.

8. The method according to one of the preceding claims comprising a step (430) deleting at least one of the applications installed on the secure element once the identity of the current owner has been replaced by the identity of the current owner.

9. The method according to any of the preceding claims, wherein the identity of the emitter of the dummy application load unit is verified before changing the ownership of the target device by implementing the following steps:
- receiving in association with the dummy application load unit an identifier (mcd_issuer_id) of the current owner of the device;
- checking that the received identifier corresponds to the identifier which is memorized in the secure element.

10. The method according any of the preceding claims, wherein the followings steps are applied before changing the ownership of the target device:
- receiving an identifier (application_id) of a target area in the target device where the identifier of the current owner of the target device is memorized;
- verifying that this identifier correctly identifies the area in the target security device where the identifier of the current owner of the device is memorized.

11. The method according to any of the preceding claims which is compliant with MULTOS standard, wherein the dummy application load unit corresponds to an application load unit (ALU) according to MULTOS standard.

12. The method according to claim 11, wherein the dummy application load unit is an application load unit (ALU) of confidential type.

13. The method according to claim 11 or 12, wherein a MULTOS application load certification (ALC) is used to verify that the dummy application load unit has been emitted by the current owner of the target device.

14. A secure element configured to be connected to a telecommunication network and to memorize an identifier of a current owner, said secure element further comprising a mechanism for loading at least an application by using an application load unit transmitted to the target device through the network, said device being adapted to:
- receive a dummy application load unit comprising an identifier of a new owner of the target secure element;
- verify that the dummy application load unit has been emitted by the current owner of the element;
- if the current owner has been correctly identified as the emitter of the dummy application load unit, change the ownership of the secure element by replacing the identifier of the current owner memorized in the secure element by the identifier of the new owner.

15. The secure element according to claim 14 which is a multi-application integrated-circuit card system.

16. A computer program comprising software code adapted to perform the method according to claims 1-13.
